Europäisches Patentamt

European Patent Office

Office européen des brevets

(19)

(11) **EP 0 680 638 B1**

(12) **FASCICULE DE BREVET EUROPEEN**

(45) Date de publication et mention
de la délivrance du brevet:
**16.09.1998 Bulletin 1998/38**

(21) Numéro de dépôt: **94904687.4**

(22) Date de dépôt: **18.01.1994**

(51) Int Cl.⁶: **G06T 7/00**

(86) Numéro de dépôt international:
**PCT/FR94/00057**

(87) Numéro de publication internationale:
**WO 94/17485 (04.08.1994 Gazette 1994/18)**

(54) **PROCEDE D'ESTIMATION DE DISPARITE ENTRE LES IMAGES MONOSCOPIQUES CONSTITUANT UNE IMAGE STEREOSCOPIQUE**

VERFAHREN ZUM BESTIMMEN DER UNGLEICHHEIT ZWISCHEN MONOSKOPISCHEN BILDERN, DIE EIN STEREOSKOPISCHES BILD DARSTELLEN

PROCESS FOR ESTIMATING DISPARITIES BETWEEN MONOSCOPIC IMAGES FORMING A STEREOSCOPIC IMAGE

(84) Etats contractants désignés:
**DE ES FR GB IT NL**

(30) Priorité: **19.01.1993 FR 9300477**

(43) Date de publication de la demande:
**08.11.1995 Bulletin 1995/45**

(73) Titulaire: **THOMSON multimedia**
**92648 Boulogne Cédex (FR)**

(72) Inventeur: **CHUPEAU, Bertrand**
**F-92402 Courbevoie Cédex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 460 997**

• **PROCEEDINGS OF THE CONFERENCE ON COMPUTER VISION AND PATTERN RECOGNITION , WASHINGTON , JUIN 83 ; IEEE ,NEW YORK (US) pages 432 - 441 FRANK GLAZER ET AL. 'Scene matching by hierarchical Correlation'**
• **PROCEEDINGS OF THE INTERNATIONAL JOINT CONFERENCE ON NEURAL NETWORKS ,SAN DIEGO (US) , JUNE 17-21 ,1990 ;IEEE NEW YORK(US) pages 885 - 890 XP144434 CHIENCHUNG CHANG ET AL. 'Multiresolution Stereo by Simulated annealing'**

# Description

La présente invention concerne un procédé d'estimation de disparité entre les images monoscopiques constituant une image stéréoscopique. Elle s'applique notamment au traitement d'images stéréoscopiques animées et numérisées en séquences, ce traitement permettant d'obtenir une description du relief par mesures des distances aux caméras de prises de vues. Elle s'applique par exemple au traitement du signal de télévisions stéréoscopiques ou aux effets spéciaux de traitement d'une image stéréoscopique.

Le traitement d'images stéréoscopiques, par exemple le détachement d'un objet de tous types de fonds, autres que bleus notamment, nécessite une connaissance du relief de cet objet.

Une image stéréoscopique résulte de la combinaison de deux vues monoscopiques prises par deux caméras placées à des endroits différents, la distance entre les caméras étant par exemple égale à la distance entre deux yeux et leur direction simulant le regard humain par exemple. Chaque image stéréoscopique est donc constituée d'une paire d'images monoscopiques. Il est connu que la connaissance de la disparité point à point entre les images d'une même paire permet de déduire la distance des objets filmés par rapport aux caméras et ainsi d'en déduire une information de relief de ces objets.

Une description physique des différences entre les deux images d'une paire stéréoscopique est obtenue par la mise en correspondance point à point fournissant des informations vectorielles. Le champ de disparité est constitué de ces informations vectorielles qui sont en fait liées au changement de perspective entre les deux images et à la distance des caméras par rapport aux objets de la scène à filmer.

Une méthode de mise en correspondance point à point de deux images, une image gauche et une image droite, constituant une image stéréoscopique est décrite dans un article: PROCEEDINGS OF THE CONFERENCE ON COMPUTER VISION AND PATTERN RECOGNITION, Miami Beach, 22-26 juin 1986, pages 219-226, IEEE, Silver Spring, US; L.R. WILLIAMS et al.: "A coarse-to-fine control strategy for stereo and motion on a mesh-connected commuter".

Une décomposition hiérarchique des images y est réalisée par niveaux de résolution, puis une estimation des disparités entre ces images est réalisée en partant du niveau de résolution le plus grossier vers des résolutions de plus en plus fines. Cette méthode, utilisant une seule pyramide d'images de résolutions croissantes, n'apporte pas toujours une estimation suffisamment précise, notamment pour des objets fins ou pour des contours, ou encore quand les zones de disparités sont sensiblement uniformes.

Il est aussi connu dans un article référencé Proceedings of the conference on computer vision and pattern recognition, June 1983, Washington (US) ; IEEE, NY (US) ; pages 432-441 ; F. Glazer : "Scene matching by hierarchical correlation" d'estimer la disparité entre 2 images en utilisant une pyramide d'images multi-résolutions : une pyramide d'images basses fréquences est d'abord construite avec un filtre passe-bas, et ensuite à chaque niveau de la pyramide un filtre passe-bande laplacien permet de générer une image hautes fréquences à partir de l'image initiale.

Il est encore connu dans une demande de brevet européen intitulée "Procédé d'estimation hiérarchique du mouvement dans une séquence d'images" et référencée EP-A-460 997 d'estimer le mouvement dans une séquence d'images par les étapes suivantes :

- décomposition hiérarchique de l'image par niveaux de résolution;
- construction de trois pyramides d'images de résolutions croissantes;
- décomposition de l'image en sous-bandes en conservant à chaque niveau de la décomposition la bande basse fréquence et les bandes hautes fréquences représentant respectivement les contours verticaux et horizontaux des images.

Les disparités points à points entre les deux images d'une même paire peuvent être décrites par des vecteurs, appelés vecteurs disparité, le but de l'invention est l'obtention d'une séquence de champs de vecteurs disparité correspondant à une séquence d'images stéréoscopiques et estimant de façon satisfaisante les différences entre les deux vues d'une image stéréoscopique, notamment avec une bonne précision.

A cet effet, l'invention a pour objet un procédé d'estimation de disparité entre les images monoscopiques constituant une image stéréoscopique, caractérisé en ce qu'il consiste :

- dans une première étape, à réaliser une même décomposition hiérarchique de chaque image monoscopique, par niveaux de résolution, en constituant au moins trois pyramides d'images de résolutions croissantes, une pyramide d'images basses fréquences et deux pyramides d'images hautes fréquences suivant les directions horizontales et verticales des images ;
- dans une deuxième étape, à estimer une disparité au niveau de résolution le plus grossier et à affiner l'estimation dans chaque niveau au fur et à mesure que la résolution augmente, la disparité étant représentée en chaque point de l'image par un vecteur dont l'origine est située au point d'une des images monoscopiques et sur l'extrémité au point correspondant de l'autre image monoscopique.

L'invention a pour principaux avantages qu'elle améliore la précision d'estimation, notamment au niveau des contours ou des objets fins, qu'elle peut être utilisée pour de nombreuses applications de traitement d'images stéréoscopiques, qu'elle permet d'associer à l'estimation de disparité une estimation de mouvements d'objets d'une image stéréoscopique et qu'elle est simple à mettre en oeuvre.

D'autres caractéristiques et avantages de l'invention apparaîtront à l'aide de la description qui suit, faite en regard des dessins annexés qui représentent:

- la figure 1, une paire d'images constituant une image stéréoscopique, obtenues par deux caméras filmant la même scène sur deux angles différents ;
- la figure 2, les images précédentes mises côte à côte ;
- la figure 3, une séquence d'images stéréoscopiques ;
- la figure 4, deux séries d'images gauches et droites successives d'une séquence d'évolution d'une image stéréoscopique ;
- la figure 5, une décomposition hiérarchique d'image en pyramide ;
- la figure 6, des illustrations de prédictions possibles ;
- la figure 7, des illustrations de fonctions de coût possibles.

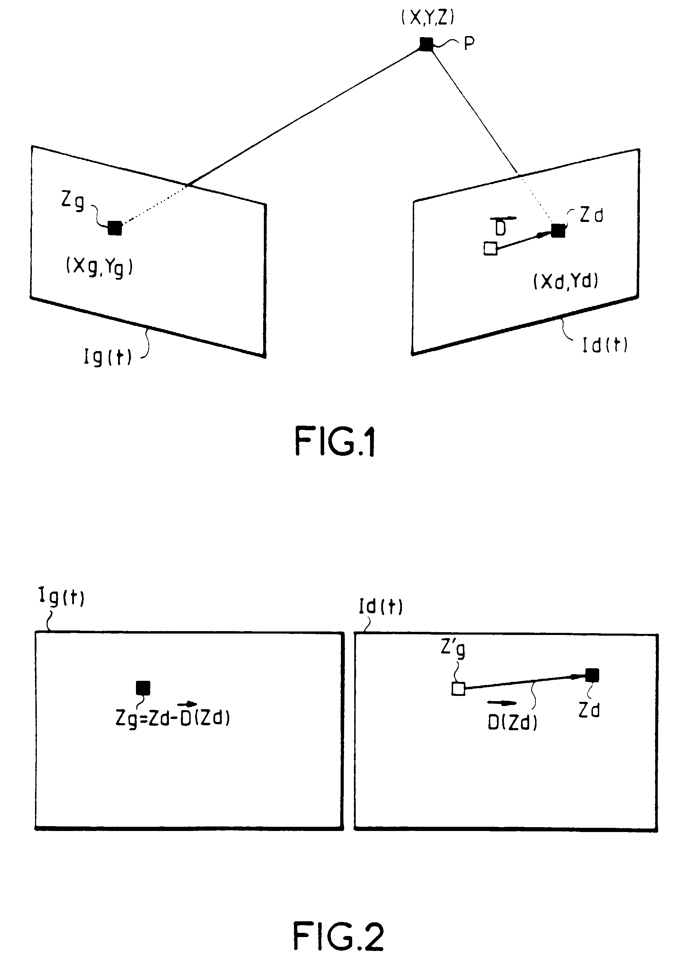

Une paire stéréoscopique d'images peut être modélisée par deux projections en perspective dans des plans images différents de la même scène tridimensionnelle. La figure 1 présente une paire d'images Ig(t), Id(t) naturelles, monoscopiques, une image gauche Ig(t) et une image droite Id(t) prises à un instant t, obtenues par exemple à l'aide de deux caméras filmant la même scène sous deux angles différents.

Le problème de l'estimation de disparité, consiste en la mise en correspondance point à point des deux images ou vues droite et gauche. Si un point P de l'espace, de coordonnées spatiales (X, Y, Z) se projette respectivement sur l'image gauche Ig(t) et sur l'image droite Id(t) en un point Zg de coordonnées (Xg, Yg) et en un point Zd de coordonnées (Xd, Yd), le vecteur disparité $\vec{D}$ assigné au point Zd de l'image de droite a pour composantes (Xd-Xg, Yd-Yg). Il est connu que l'information de disparité permet de calculer la distance des points de la scène filmée à la caméra, dès lors que les paramètres optiques et géométriques de l'acquisition des images sont connus. Ces paramètres sont notamment les distances focales, les centres optiques et la distance entre les deux caméras.

La figure 2 présente côté à côte les deux images monoscopiques Ig(t), Id(t) de la figure précédente. Un vecteur disparité à un instant t, est défini en chaque point Zd de l'image droite Id(t), le point Zd étant repéré par un couple de coordonnées (x, y) dans cette image Id(t). Le vecteur disparité en ce point Zd est par exemple noté $\vec{D}$ (Zd). Le point de l'image gauche Ig(t) correspondant au point Zd de l'image droite Id(t) étant noté Zg, il est relié au premier point Zd par la relation suivante :

$$Zg = Zd - \vec{D}(Zd) \qquad (1)$$

Un point Z'g de l'image droite Id(t) représente le point Zg de l'image gauche Ig(t) dans cette dernière. Il est aussi relié au point Zd de l'image droite Id(t) par la relation (1).

Selon l'invention, le procédé d'estimation de disparité stéréoscopique entre l'image gauche Ig(t) et l'image droite Id(t) utilise une technique d'estimation de mouvement entre deux images consécutives d'une séquence monoscopique décrite dans le brevet français n° 2 663 178: "Procédé d'estimation hiérarchique du mouvement dans une séquence d'images", l'image droite Id(t) étant assimilée à une image consécutive de l'image gauche Ig(t) et le vecteur disparité $\vec{D}$ étant assimilé au vecteur mouvement. Ainsi, dans une première étape, une même décomposition hiérarchique de chaque image monoscopique Id(t), Ig(t) est réalisée par niveaux de résolution. Pour cela, au moins trois pyramides d'images de résolution croissante sont construites: une pyramide d'images basses fréquences et deux pyramides d'images hautes fréquences suivant les directions horizontales et verticales des images Id(t), Ig(t). Dans une deuxième étape, une disparité est estimée au niveau de résolution le plus grossier, puis cette estimation est affinée dans chaque niveau de résolution au fur et à mesure que la résolution augmente.

L'analyse de la disparité est effectuée à l'aide d'une décomposition hiérarchique en sous-bandes des images monoscopiques analysées Id(t), Ig(t), en conservant à chaque niveau de résolution de la décomposition la bande basse fréquence et les bandes hautes fréquences représentant respectivement les contours verticaux et horizontaux de l'image.

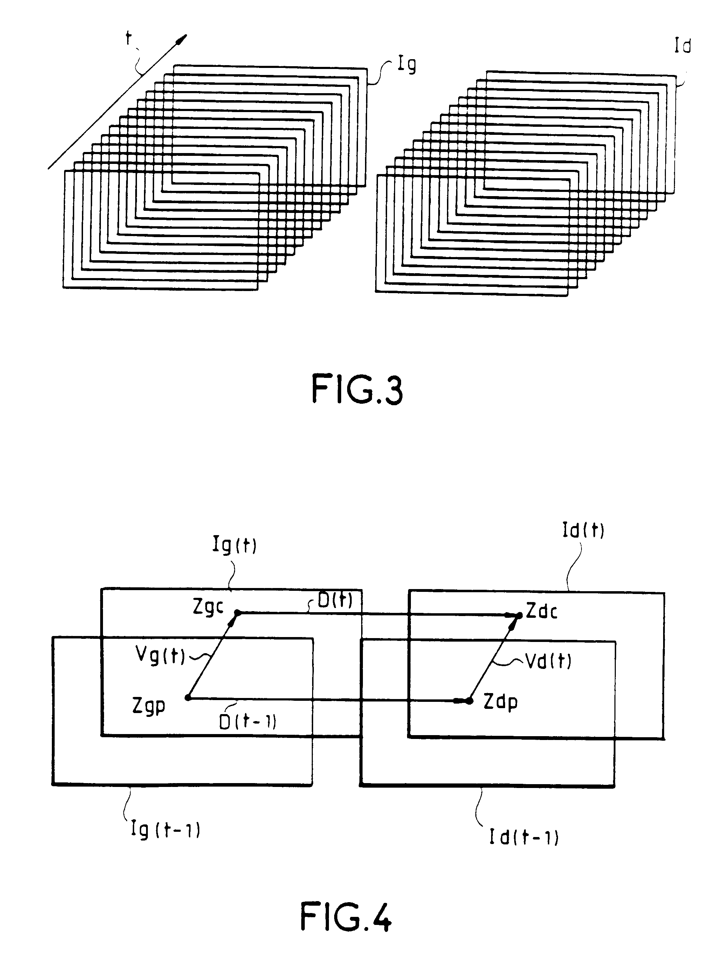

La figure 3 présente une séquence d'images stéréoscopiques constituée d'images monoscopiques gauches Ig et d'images monoscopiques droites Id évoluant en fonction du temps t.

L'image stéréoscopique évoluant au cours du temps, comme l'illustre la figure 3, il peut être nécessaire d'effectuer des prédictions temporelles des disparités entre les images gauches Ig et droites Id de l'image stéréoscopique.

La figure 4 présente deux séries d'images gauches et droites successives d'une séquence d'évolution d'une image stéréoscopique. L'image monoscopique gauche Ig(t) prise à un instant t est précédée d'une image monoscopique gauche I(t-1) prise à un instant t-1. De même, l'image monoscopique droite Id(t) prise à un instant t est précédée d'une image monoscopique droite Id(t-1) prise à un instant t-1.

La prédiction temporelle du vecteur disparité $\vec{D}$(t) en un point de l'image droite Id(t) est calculée à partir du vecteur disparité $\vec{D}$(t-1) correspondant à ce point dans l'image droite précédente Id(t-1), à l'aide des vecteurs de mouvement calculés entre l'instant t et l'instant précédent t-1 sur les images droites Id(t-1), Id(t) et gauches Ig(t-1), Ig(t). Ces vecteurs sont respectivement notés Vd(t) et Vg(t), et appelés vecteur mouvement droit et vecteur mouvement gauche.

Les vecteurs disparité et mouvement précités sont reliés par la relation suivante :

$$\vec{D}(t) + \vec{V} g(t) = \vec{D}(t\text{-}1) + \vec{V} d(t) \qquad (2)$$

Pratiquement, la prédiction temporelle du vecteur disparité $\vec{D}(t)$ en un point courant Zdc de l'image droite Id(t) à un instant t peut par exemple être obtenu de la façon suivante: le point correpondant Zdp dans l'image droite Id(t-1) à l'instant précédent t-1 est connu par le vecteur mouvement droit $\vec{V}d(t)$ à l'instant t, donc ces deux points Zdc, Zdp sont reliés par la relation suivante :

$$Zdp = Zdc - \vec{V} d(t) \qquad (3)$$

Le point Zgp de l'image gauche Ig(t-1) à l'instant précédent t-1 correspondant au point Zdp de l'image droite Id(t-1) prise à ce même instant t-1 qui correspond au point courant Zdc de l'image droite Id(t) prise à l'instant t est connu par le vecteur disparité $\vec{D}(t\text{-}1)$ de l'instant précédent t-1 d'après la relation suivante :

$$Zgp = Zdp - \vec{D}(t\text{ -}1) \qquad (4)$$

Le point Zgc correspondant à ce point Zgp dans l'image gauche Ig(t) à l'instant t peut être obtenu à l'aide du vecteur mouvement gauche Vg(t-1), pris à l'instant précédent d'après la relation suivante :

$$Zgc = Zgp + \vec{Vg}(t\text{-}1)) \qquad (5)$$

Une prédiction temporelle du vecteur disparité $\vec{D}(t)$ au point courant Zdc de l'image droite Id(t) à l'instant t est donnée par le vecteur formé du couple de points (Zgc, Zdc) où Zgc, correspondant au point courant Zdc de l'image droite Id(t) dans l'image gauche Ig(t) au même instant t est calculé à l'aide des trois dernières relations (3), (4), (5) précédemment établies. Dans ce dernier cas, une estimation de mouvement et de disparité est ainsi proposée, dans laquel la disparité est prédite temporellement par elle-même, en corrigeant cette prédiction par le mouvement éventuel des objets dans la scène stéréoscopique.

Une estimation conjointe de disparité et de mouvement peut être réalisée, le mouvement est estimé par exemple de façon indépendante sur chacune des deux séquences d'images droites Id et gauches Ig. Dans ce cas, le vecteur mouvement calculé sur une séquence, droite ou gauche, n'est prédit temporellement que par les vecteurs mouvements calculés précédemment sur la même séquence. La technique d'estimation de mouvement peut être celle décrite par le brevet français N° 2 663178. La disparité est, elle, prédite temporellement par la disparité calculée aux instants précédents, compensée par les mouvements calculés, indépendamment, sur les images droites Id et gauches Ig. Les relations (3), (4), (5) montrent que le vecteur prédiction $\vec{D}(t)$ à un instant t nécessite la connaissance du vecteur prédiction $\vec{D}(t\text{-}1)$ à l'instant précédent ainsi que du vecteur mouvement droit Vd(t) à l'instant t et du vecteur mouvement gauche Vg(t-1) à l'instant t-1.

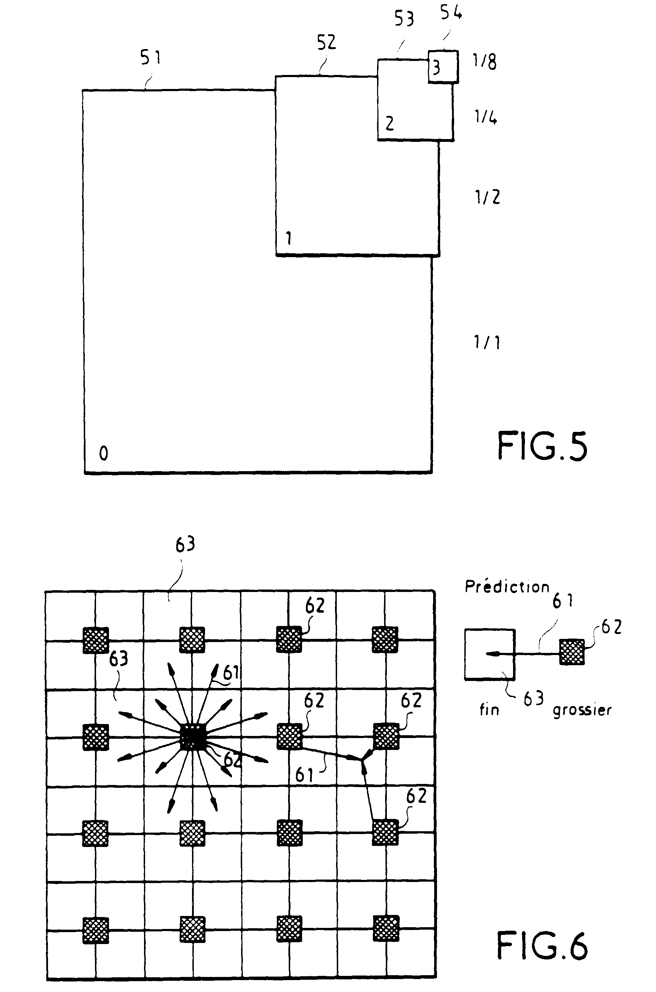

Les figures 5 à 7 accompagnent la description d'améliorations du procédé d'estimation décrit dans le brevet français N° 2 663 178 applicables à l'estimation de mouvement ou à l'estimation de disparité de la présente invention. La description des améliorations précitées est illustrée par son application à l'estimation de disparité.

Comme l'illustre la figure 5, les images sources 51, 52, 53, 54 de luminances sont décomposées en une pyramide multirésolution. L'image source, possèdant un nombre L de lignes et un nombre C de colonnes, est par définition l'image 51 de niveau 0, de résolution $1/2^0 = 1/1$ dans une telle pyramide. Dans cette pyramide une image de niveau i, de résolution $1/2^i$, est constituée de $L/2^i$ lignes et $C/2^i$ colonnes. Elle est obtenue par i filtrages passe-bas et i sous-échantillonnages par 2 successifs en lignes et en colonnes. Cette pyramide d'images basses fréquences est déduite d'une décomposition hiérarchique en sous-bandes telle que décrite par le brevet français N° 2 663 178.

L'analyse d'image a lieu de façon hiérarchique sur la pyramide. Elle consiste alors à effectuer d'abord une estimation globale à un niveau de résolution grossier de l'image, puis à affiner cette estimation au fur et à mesure que la résolution des images traitées augmente. A chaque niveau de résolution $1/2^i$ dans la pyramide, les vecteurs disparité estimés au niveau de résolution directement plus grossier $1/2^{i+1}$, ont leurs modules multipliés par deux pour tenir compte du facteur de sous-échantillonnage et sont utilisés pour la prédiction. Le brevet précité décrit comment cette prédiction peut être améliorée en proposant non pas une seule prédiction issue d'un niveau plus grossier immédiatement précédent, mais quatre, pour le calcul d'un vecteur disparité au niveau courant. Cela revient à porter la contribution d'un vecteur du niveau grossier pour la prédiction de quatre à seize points du niveau plus fin suivant. Cependant, il est possible par exemple de réduire le nombre de prédictions issues du niveau grossier à trois pour le calcul d'un vecteur du niveau fin. Cela revient à porter la contribution d'un vecteur du niveau grossier pour la prédiction de douze points seulement du niveau fin comme l'illustre la figure 6. Sur cette figure, une prédiction est illustrée par une flèche 61 reliant un niveau grossier 62 à un niveau plus fin 63.

Les prédictions 61 précitées peuvent être chacune améliorées par une prédiction temporelle supplémentaire. Ainsi, un vecteur disparité estimé en un point donné à un instant précédent t-1 entre des images droites Id(t-1) et gauche Ig(t-1) au même niveau de résolution est par exemple projeté temporellement dans la direction du vecteur mouvement associé au point donné vers les images Id(t), Ig(t) prises à l'instant t. Une méthode de prédiction temporelle qui peut être appliquée est décrite dans le brevet français N° 2 675 002 : "Procédé de classification des pixels d'une image appartenant à une séquence d'images animées et procédé d'interpolation temporelle d'images utilisant ladite classification".

Ainsi, le calcul du vecteur disparité est effectué en tout point de l'image, niveau après niveau dans la pyramide multirésolution, du plus grossier au plus fin constitué par l'image originale non sous-échantillonnée. Quatre vecteurs de prédiction peuvent être proposés lors du calcul de chaque vecteur disparité : un vecteur issu du vecteur calculé à l'instant précédent, projeté dans la direction du mouvement, et trois calculés au niveau directement plus grossier. Il s'ensuit que seule une correction faible est nécessaire autour d'une telle prédiction pour obtenir le bon vecteur disparité.

Un vecteur disparité à estimer $\vec{D}$ est la somme d'un vecteur de prédiction $\vec{P}$ et d'une correction $\vec{\delta}$, soit:

$$\vec{D} = \vec{P} + \vec{\delta} \qquad (6)$$

Suivant l'amplitude maximale, en horizontal et en vertical, du vecteur disparité à estimer, la recherche autour de la prédication de ce dernier, représentée par un vecteur, peut par exemple être effectuée uniquement en horizontal ou dans les deux directions, horizontale et verticale. Le brevet français n° 2 663 178 décrit une recherche dans les deux directions. Une telle correction de résolution de ±1 pixel, initialisée à 0 à un niveau N-1 de la pyramide par exemple, conduit à une valeur maximale égale à :

$$|D\max| = \sum_{k=0}^{N-1} 2^k \qquad (7)$$

Ainsi, le nombre de niveaux nécessaire Nmax+1 pour estimer une disparité d'amplitude maximale égale à la valeur maximale IDmaxl précitée est donnée par la partie entière du logarithme de base 2 de cette valeur maximale IDmaxl, soit :

$$\text{Nmax} = \text{partie entière de log2 } (|D\max|) \qquad (8)$$

Afin notamment d'économiser le nombre de niveaux de résolution, il est possible de séparer le calcul du vecteur disparité en horizontal et en vertical. Soient IDx maxI et IDy maxI les valeurs maximales de la disparité respectivement en horizontal et en vertical. Une recherche de ±1 pixel initialisée à 0 n'est nécessaire qu'à partir du niveau de rang Nx max en horizontal et de rang Ny max en vertical, ces niveaux Nx max, Ny max étant calculés à partir des deux relations (7) et (8) précédentes. IDx maxI étant par exemple supposée supérieure à IDy maxI, une recherche uniquement horizontale est menée dans la pyramide entre les niveaux Nx max et Ny max +1, suivie par une recherche bidimensionnelle, en horizontal et en vertical, entre le niveau Ny max et 0.

Ainsi, le niveau de départ de l'estimation de disparité dans la pyramide est calculé en fonction de la disparité maximale à atteindre, fixé a priori. Ce calcul est par exemple fait séparément pour la disparité horizontale et la disparité verticale, une simple recherche horizontale étant menée tant que l'amplitude maximale en verticale ne justifie pas une recherche bidimensionelle.

Le vecteur de disparité choisi est celui qui minimise une certaine fonction de coût telle que décrite par exemple dans le brevet français N° 2 663 178. Une fonction de coût peut être par exemple la somme des carrés des différences de luminance entre les images droite et gauche, la somme étant prise par exemple sur une fenêtre de 3X3 pixels centrée au point de calcul des vecteurs disparité.

Il est possible de déduire une mesure de confiance du vecteur de disparité choisi. Dans une zone homogène de l'image notamment, les valeurs de la fonction de coût étant sensiblement égales quel que soit le vecteur testé, la confiance dans le vecteur choisi sera faible. En revanche dans une région de l'image à fort gradient, le vecteur correct correspond à un minimum très net de la fonction de coût et est donc très fiable.

La confiance est par exemple calculée séparément par la composante horizontale et la composante verticale du vecteur. Si Px est la composante horizontale du vecteur de prédiction, des valeurs Px±n sont proposées pour le vecteur corrigé, n valant par exemple 2 si la recherche est monodimensionnelle ou 1 si la recherche est bidimensionnelle, quatre vecteurs étant alors proposés. Le vecteur qui minimise la fonction de coût étant choisi, il a pour composante horizontale Pxc où Pxc appartient à l'intervalle [Px-n, Px + n]. De façon à encadrer la valeur minimale de la fonction de coût, le calcul de la confiance est fait sur l'intervalle [Px-n-1, Px+n+1], même si le choix du minimum est fait dans l'intervalle [Px-n, Px+n].

F représentant la fonction de coût, trois valeurs de cette fonction sont disponibles F(Pxc), F(Pxc-1) et F(Pxc+1). La confiance conf (Pxc) dans la composante horizontale Pxc du vecteur choisi est par exemple donnée par les deux relations suivantes :

$$Courb(Pxc) = \frac{F(Pxc - 1) + F(Pxc + 1) - 2F(Pxc)}{2}$$

$$(9)$$

$$Conf(Pxc) = \frac{courb(Pxc)}{K + F(Pxc)} \quad (10),$$

K étant une constante positive.

Une confiance ainsi définie varie de 0 à + ∞ et il peut être avantageux de restreindre l'ensemble de ses variations à l'intervalle [0, 1]. Pour cela, il est possible de définir une confiance normalisée cf (Pxc) pour la composante horizontale Pxc du vecteur de prédiction, cette confiance normalisée étant définie par la relation suivante :

$$cf(Pxc) = \frac{conf(Pxc)}{1 + conf(Pxc)} \quad (11)$$

en combinant les relations (10) et (11), il vient :

$$cf(Pxc) = \frac{courb(Pxc)}{K + courb(Pxc) + F(Pxc)} \quad (12)$$

La confiance normalisée ainsi définie, tend asymptotiquement vers 1 quand la courbure de la courbe de la fonction de coût F augmente. La constante K permet de contrôler la variation de la confiance.

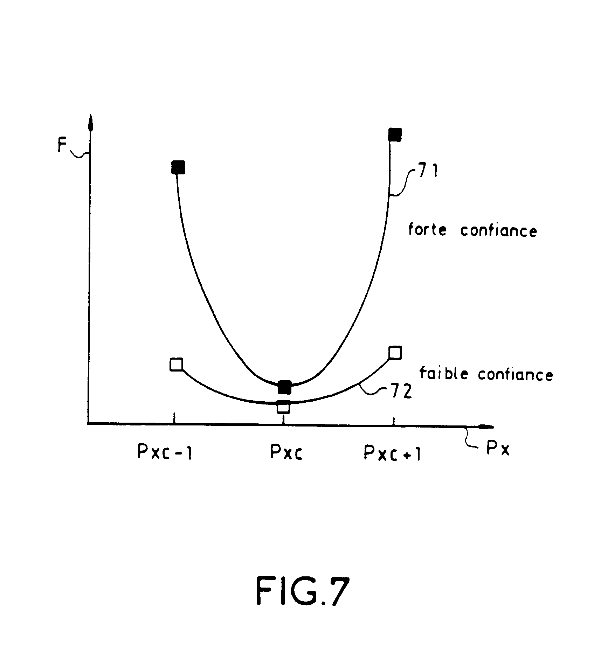

La figure 7 présente à titre d'exemple, deux courbes de fonction de coût F possible. L'axe des abscisses représente les valeurs de la composante horizontale Px du vecteur de prédiction et l'axe des ordonnées représente la fonction de coût F. Une courbe 71 possède un fort rayon de courbure pour la composante Pxc signifiant que le vecteur de prédiction choisi possède une forte confiance. Une courbe 72 possède un faible rayon de courbure pour cette composante, signifiant que le vecteur choisi possède une faible confiance.

Des relations analogues aux relations précédentes (9), (10), (11), (12) peuvent être obtenues pour la composante verticale Py du vecteur de prédiction choisi, son traitement étant identique.

Une mesure de confiance, comprise entre 0 et 1, est donc associée à la composante horizontale et à la composante verticale de chaque vecteur disparité estimé. A chacun des vecteurs proposés, au nombre de quatre par exemple, est associé un vecteur corrigé, et à chaque vecteur corrigé sont associées une confiance et une valeur de coût. Le vecteur corrigé choisi est par exemple celui qui minimise la fonction de coût, qui a donc la valeur de coût minimum.

Si ce minimum n'est pas suffisamment marqué, le choix est par exemple guidé par la confiance.

Un lissage orienté, ou filtrage, des vecteurs disparités est par exemple réalisé dans la pyramide multirésolution, à tous les niveaux de résolution, entre l'estimation et la prédiction du niveau plus fin. Ce lissage permet notamment de propager les valeurs à forte confiance vers les régions de l'image à faible confiance. Une technique de lissage est notamment décrite dans l'article de P. Anandan : "A computational framework and an algorithm for the measurement of visual motion", International Journal of Computer Vision, 2, 283-310, 1989.

Le lissage est par exemple mené de façon indépendante sur la composante horizontale et la composante verticale d'un vecteur disparité.

## Revendications

1. Procédé d'estimation de disparité entre les images monoscopiques droite et gauche (Id, Ig) constituant une image stéréoscopique, caractérisé en ce qu'il consiste :

   - dans une première étape, à réaliser une même décomposition hiérarchique de chaque image (Id, Ig) monoscopique, par niveaux de résolution, en constituant au moins trois pyramides d'images de résolutions croissantes, une pyramide d'images basses fréquences et deux pyramides d'images hautes fréquences suivant les directions horizontales et verticales des images ;
   - dans une deuxième étape, à estimer une disparité dans la correspondance point à point des deux images droite et gauche au niveau de résolution le plus grossier et à affiner l'estimation dans chaque niveau au fur et à mesure que la résolution augmente, la disparité étant représentée en chaque point de l'image par un vecteur de disparité ($\vec{D}$) dont l'origine est située au point (Zg) d'une des images monoscopiques et sur l'extrémité au point (Zd) correspondant de l'autre image monoscopique ;
   - l'analyse de la disparité étant effectuée à l'aide d'une décomposition hiérarchique en sous-bandes des images monoscopiques en conservant à chaque niveau de la décomposition la bande basse fréquence et les bandes hautes fréquences représentant respectivement les contours verticaux et horizontaux des images.

2. Procédé selon la revendication 1, caractérisé en ce qu'il utilise, pour chaque estimation et à un niveau de résolution donné, trois vecteurs de prédiction (61), ces vecteurs étant obtenus par l'attribution de chaque vecteur estimation d'un point du niveau de résolution inférieur aux 12 points entourant ce point au niveau de résolution considéré.

3. Procédé selon la revendication 2, caractérisé en ce qu'une prédiction temporelle supplémentaire est réalisée par projection d'un vecteur disparité estimé en un point donné, à un instant t-1, entre les images monoscopiques droite et gauche (Id, Ig) existant à cet instant au même niveau de résolution, ladite projection étant effectuée dans la direction du vecteur définissant le mouvement entre les instants t-1 et t.

4. Procédé selon l'une quelconque des revendications précédentes, caractérisé en ce que le calcul du vecteur de disparité est effectué séparément pour la disparité horizontale et la disparité verticale de l'image, les valeurs maximales des disparités horizontale et verticale étant fixées a priori.

5. Procédé selon la revendication 4, caractérisé en ce que seule une recherche horizontale de disparité est effectuée tant que l'amplitude verticale de la disparité n'a pas atteint la valeur maximale fixée a priori.

6. Procédé selon l'une quelconque des revendications précédentes, caractérisé en ce que le vecteur de disparité est choisi comme celui qui minimise une fonction de coût égale à la somme des carrés des différences de luminance sur les points d'une fenêtre centrée au point de calcul des vecteurs de disparité.

7. Procédé selon la revendication 6, caractérisé en ce qu'il comprend une étape de calcul d'une fonction de confiance permettant de mesurer le degré de confiance du vecteur de disparité choisi, le degré de confiance augmentant avec le rayon de courbure de la fonction de coût au voisinage du minimum de ladite fonction de coût.

8. Procédé selon la revendication 7, caractérisé en ce qu'un filtrage des vecteurs de disparité par la fonction de confiance est réalisé, à chaque niveau de résolution, après l'estimation et avant la prédiction de chaque vecteur de disparité.

**Patentansprüche**

1. Verfahren zum Schätzen der Ungleichheit zwischen monoskopischen rechten und linken Bildern (Id, Ig), die ein stereoskopisches Bild darstellen, gekennzeichnet durch:

   - einen ersten Schritt zur Durchführung einer gleichen hierarchischen Zerlegung jedes monoskopischen Bildes (Id, Ig) durch den Auflösungswert, wobei wenigstens drei Pyramiden von Bildern mit zunehmenden Auflösungen, eine Pyramide von Bildern mit niedrigen Frequenzen und zwei Pyramiden von Bildern mit hohen Frequenzen entlang der Horizontalrichtung und der Vertikalrichtung der Bilder gebildet werden,

   - einen zweiten Schritt, um eine Ungleichheit in der Übereinstimmung Punkt für Punkt zwischen dem rechten und dem linken Bild bei dem Wert der gröbsten Auflösung zu schätzen und die Schätzung bei jedem Wert entsprechend der erhöhten Auflösung zu verfeinern, wobei die Ungleichheit bei jedem Punkt des Bildes durch einen Ungleichheitsvektor ($\vec{D}$) dargestellt wird, dessen Ursprung beim Punkt (Zg) eines der monoskopischen Bilder und am äußersten Ende bei dem Punkt (Zd) liegt, der dem anderen monoskopischen Bild entspricht,

   - wobei die Analyse der Ungleichheit mittels einer hierarchischen Zerlegung in Unterbänder der monoskopischen Bilder erfolgt und bei jedem Wert der Zerlegung das untere Frequenzband und die oberen Frequenzbänder, die jeweils die vertikalen und horizontalen Konturen der Bilder darstellen, erhalten bleiben.

2. Verfahren nach Anspruch 1, dadurch gekennzeichnet, daß für jede Schätzung und bei einem bestimmten Wert der gegebenen Auflösung drei Vektoren für die Voraussage (61) verwendet werden, wobei diese Vektoren durch die Zuweisung jedes Schätzvektors eines Punktes mit einem Auflösungswert von weniger als 12 Punkten erfolgt, die den Punkt bei dem betrachteten Auflösungswert umgeben.

3. Verfahren nach Anspruch 2, dadurch gekennzeichnet, daß eine zusätzliche zeitliche Voraussage durch Projektion eines in einem bestimmten Punkt geschätzten Ungleichheitsvektors bei einem Zeitpunkt t-1 zwischen dem rechten und dem linken monoskopischen Bild (Id, Ig) erfolgt, die in diesem Zeitpunkt bei demselben Auflösungswert bestehen, wobei die Projektion in der Richtung des Vektors erfolgt, der die Bewegung zwischen den Zeitpunkten t-1 und t bestimmt.

4. Verfahren nach einem der vorangehenden Ansprüche, dadurch gekennzeichnet, daß die Berechnung des Ungleichheitsvektors getrennt für die horizontale Ungleichheit und die vertikale Ungleichheit des Bildes erfolgt, wobei zunächst die Maximalwerte der horizontalen und vertikalen Ungleichheiten festgelegt werden.

5. Verfahren nach Anspruch 4, dadurch gekennzeichnet, daß nur eine einzige horizontale Untersuchung der Ungleichheit durchgeführt wird, solange die vertikale Amplitude der Ungleichheit den zunächst festgelegten Maximalwert nicht erreicht hat.

6. Verfahren nach einem der vorangehenden Ansprüch, dadurch gekennzeichnet, daß als der Ungleichheitsvektor derjenige ausgewählt wird, der eine Funktion gleichen Aufwands für die Summe der Quadrate der Helligkeitsunterschiede bei den Punkten eines Fensters minimiert, das zu dem Berechnungspunkt der Ungleichheitsvektoren zentriert ist.

7. Verfahren nach Anspruch 6, gekennzeichnet durch einen Schritt zur Berechnung einer Zuverlässigkeitsfunktion, die es ermöglicht, das Maß der Zuverlässigkeit des gewählten Ungleichheitsvektors zu messen, wobei das Maß der Zuverlässigkeit mit dem Kurvenverlauf der Funktion des Aufwandes in der Nachbarschaft des Minimums der genannten Aufwandskurve erhöht wird.

8. Verfahren nach Anspruch 7, dadurch gekennzeichnet, daß
eine Filterung der Ungleichheitsvektoren durch die Zuverlässigkeitsfunktion bei jedem Auflösungswert nach der Schätzung und vor der Voraussage jedes Ungleichheitsvektors durchgeführt wird.

## Claims

1. Process for estimating disparity between the right and left monoscopic images (Ir, Il) making up a stereoscopic image, characterized in that it consists:

   - in a first step, in carrying out one and the same hierarchical decomposition of each monoscopic image (Ir, Il), by levels of resolution, thereby building at least three pyramids of images of increasing resolutions, one low-frequency image pyramid and two high-frequency image pyramids in the horizontal and vertical directions of the images;
   - in a second step, in estimating a disparity in the point-to-point matching of the two right and left images at the coarsest level of resolution and in refining the estimate in each level as the resolution increases, the disparity being represented at each point of the image by a disparity vector ($\vec{D}$) whose origin is situated at the point (Zl) of one of the monoscopic images and on the tip at the corresponding point (Zr) of the other monoscopic image;
   - the disparity being analysed with the aid of a hierarchical decomposition of the monoscopic images into sub-bands while preserving at each level of the decomposition the low-frequency band and the high-frequency bands respectively representing the vertical and horizontal outlines of the images.

2. Process according to Claim 1, characterized in that it uses, for each estimation and at a given level of resolution, three prediction vectors (61), these vectors being obtained by allocating each estimation vector of a point of the lower level of resolution to the 12 points surrounding this point at the level of resolution considered.

3. Process according to Claim 2, characterized in that an additional temporal prediction is made by projecting a disparity vector estimated at a given point, at an instant t-1, between the right and left monoscopic images (Ir, Il) existing at this instant at the same level of resolution, the said projection being performed in the direction of the vector defining the motion between the instants t-1 and t.

4. Process according to any one of the preceding claims, characterized in that the calculation of the disparity vector is performed separately for the horizontal disparity and the vertical disparity of the image, the maximum values of the horizontal and vertical disparities being fixed a priori.

5. Process according to Claim 4, characterized in that only a horizontal disparity search is carried out for as long as the vertical amplitude of the disparity, has not attained the maximum value fixed a priori.

6. Process according to any one of the preceding claims, characterized in that the disparity vector is chosen, as that which minimizes a cost function equal to the sum, of the squares of the differences in luminance over the points of a window centred at the point of calculation of the disparity vectors.

7. Process according to Claim 6, characterized in that it comprises a step of calculating a confidence function making it possible to measure the degree of confidence of the chosen disparity vector, the degree of confidence increasing with the radius of curvature of the cost function in the neighbourhood of the minimum of the said cost function.

8. Process according to Claim 7, characterized in that a filtering of the disparity vectors by the confidence function is carried out, at each level of resolution, after the estimation and before the prediction of each disparity vector.

FIG.1

FIG.2

FIG.3

FIG.4

FIG.5

FIG.6

FIG.7